(19) Europäisches Patentamt
European Patent Office
Office européen des brevets

(11) EP 4 074 668 A1

(12) **EUROPEAN PATENT APPLICATION**
published in accordance with Art. 153(4) EPC

(43) Date of publication:
**19.10.2022 Bulletin 2022/42**

(21) Application number: **20898622.4**

(22) Date of filing: **09.12.2020**

(51) International Patent Classification (IPC):
***C03C 27/12*** (2006.01) ***B32B 27/20*** (2006.01)

(52) Cooperative Patent Classification (CPC):
**B32B 17/00; B32B 27/20**

(86) International application number:
**PCT/JP2020/045880**

(87) International publication number:
**WO 2021/117773 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.12.2019 JP 2019224905**

(71) Applicant: **SEKISUI CHEMICAL CO., LTD.**
**Osaka-shi**
**Osaka**
**530-8565 (JP)**

(72) Inventors:
- **SAKAMOTO, Yuu**
  **Koka-shi, Shiga 528-8585 (JP)**
- **NAKADATE, Junichi**
  **Mishima-gun, Osaka 618-0021 (JP)**
- **MAEDA, Satoshi**
  **Mishima-gun, Osaka 618-0021 (JP)**
- **YAMAMURA, Reiko**
  **Koka-shi, Shiga 528-8585 (JP)**

(74) Representative: **Ter Meer Steinmeister & Partner Patentanwälte mbB**
**Nymphenburger Straße 4**
**80335 München (DE)**

(54) **LAMINATED GLASS INTERLAYER, AND LAMINATED GLASS**

(57) An interlayer film for laminated glass is an interlayer film for laminated glass, the interlayer film having a structure of one or two or more layers, and comprising a first layer comprising a thermoplastic resin and a silica particle, in which the silica particle has an average secondary particle size (d50) of 0.01 μm or more and 2.2 μm or less and a maximum particle size peak value of 20 μm or less.

Fig. 1

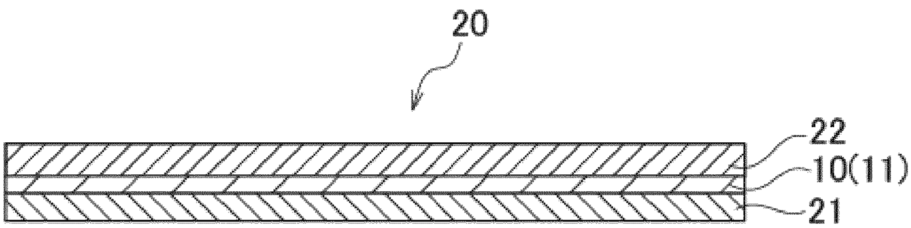


EP 4 074 668 A1

## Description

Technical Field

The present invention relates to an interlayer film for laminated glass, and a laminated glass comprising an interlayer film for laminated glass.

Background Art

Laminated glass is widely used in window glass for various conveyances such as automobiles, railway vehicles, airplanes and marine vessels, and window glass for buildings and the like, because laminated glass is less likely to cause glass fragments to scatter even if it is subjected to an external impact and then broken, and is thus safe. Such laminated glass as is widely known is commonly one obtained by interposing an interlayer film for glass, configured from, for example, a thermoplastic resin, between paired sheets of glass, and then integrating the sheets of glass with the interlayer film. Such a thermoplastic resin constituting such an interlayer film for glass is often plasticized due to compounding of a plasticizer.

Examples of such an interlayer film for glass include an interlayer film having a single-layer structure including one layer and an interlayer film having a multiple-layer structure of two or more layers. It is known that such an interlayer film for glass functions as a noise barrier layer by allowing any one layer constituting the interlayer film to be reduced in glass transition temperature and/or increased in amount of a plasticizer. It is also known that, in a case where the thermoplastic resin used is a polyvinyl acetal resin, such an interlayer film functions as a noise barrier layer by allowing for a reduction in amount of a hydroxyl group in a polyvinyl acetal resin comprised in any one layer.

It is also known that a silica particle is compounded in any one layer of an interlayer film for laminated glass in order to increase mechanical strength of laminated glass, such as flexural rigidity (see, for example, PTLs 1 to 5). The above-mentioned noise barrier layer is relatively low in flexural rigidity, and thus a silica particle is sometimes compounded therein.

Such an interlayer film for laminated glass may be increased in haze value and deteriorated in viewability of laminated glass, due to compounding of a silica particle. Thus, for example, PTL 1 has studied adjustment of the refractive index of such a silica particle and thus a decrease in difference from the refractive index at 20°C of a polyvinyl acetal resin plasticized, constituting such an interlayer film for laminated glass.

Citation List

Patent Literature

PTL 1: WO 2008/122610
PTL 2: JP 2009-540065 A
PTL 3: WO 2016/039477
PTL 4: WO 2016/039473
PTL 5: WO 2019/131520

Summary of Invention

Technical Problem

However, a conventional interlayer film for laminated glass, even if reduced in difference in refractive index at an ordinary temperature and reduced in haze value, for example, as in PTL 1, has had the problem of being deteriorated in haze value in a high temperature region to cause deterioration in viewability of laminated glass, for example, in summer. According to studies of the present inventors, the reason is that while the refractive index of a thermoplastic resin such as a polyvinyl acetal resin is changed by temperatures, the refractive index of a silica particle is not almost changed, and thus the difference in refractive index between a silica particle and a thermoplastic resin increases in a high temperature region. Accordingly, it is difficult to reduce both the haze values under an ordinary temperature environment and under a high-temperature environment by adjustment of the refractive index of a silica particle.

An object of the present invention is then to provide an interlayer film for laminated glass, and a laminated glass, which can allow for a reduction in haze value not only under an ordinary temperature environment, but also under a high-temperature environment, to thereby prevent deterioration in viewability of the laminated glass, for example, in

summer, even in the case of compounding of a silica particle to the interlayer film for laminated glass.

Solution to Problem

The present inventors have made intensive studies, and as a result, have found that the above problems can be solved by adjusting the average secondary particle size (d50) and the maximum particle size peak value of a silica particle comprised in an interlayer film for laminated glass, leading to completion of the present invention below. The gist of the present invention relates to the following [1] to [12].

[1] An interlayer film for laminated glass, the interlayer film having a structure of one or two or more layers, comprising:

a first layer comprising a thermoplastic resin and a silica particle, wherein
the silica particle has an average secondary particle size (d50) of 0.01 μm or more and 2.2 μm or less and a maximum particle size peak value of 20 μm or less.

[2] The interlayer film for laminated glass according to [1], wherein the silica particle has a minimum particle size peak value of 0.01 μm or more and 2.0 μm or less.
[3] The interlayer film for laminated glass according to [1] or [2], wherein an amount of oil absorption of the silica particle is 230 ml/100 g or more and 500 ml/100 g or less.
[4] The interlayer film for laminated glass according to any one of [1] to [3], wherein a content of the silica particle is 12 parts by mass or more and 60 parts by mass or less based on 100 parts by mass of the thermoplastic resin.
[5] The interlayer film for laminated glass according to any one of [1] to [4], wherein a tanδ at 0.1 rad/s and 200°C of the first layer is 0.8 or more.
[6] The interlayer film for laminated glass according to any one of [1] to [5], wherein a glass transition temperature of the first layer is 10°C or less.
[7] The interlayer film for laminated glass according to any one of [1] to [6], comprising:

a second layer comprising a thermoplastic resin, wherein
the second layer is provided on one surface of the first layer, and
a glass transition temperature of the first layer is lower than a glass transition temperature of the second layer.

[8] The interlayer film for laminated glass according to [7], comprising:

a third layer comprising a thermoplastic resin, wherein
the third layer is provided on another surface of the second layer, and
a glass transition temperature of the first layer is lower than a glass transition temperature of the third layer.

[9] The interlayer film for laminated glass according to any one of [1] to [8], comprising:

a second layer comprising a thermoplastic resin, wherein
the thermoplastic resin in the first layer is a polyvinyl acetal resin, and
the thermoplastic resin in the second layer is a polyvinyl acetal resin.

[10] The interlayer film for laminated glass according to [9], wherein

a content rate of a hydroxyl group in the polyvinyl acetal resin in the first layer is lower than a content rate of a hydroxyl group in the polyvinyl acetal resin in the second layer, and
an absolute value of a difference between the content rate of a hydroxyl group in the polyvinyl acetal resin in the first layer and the content rate of a hydroxyl group in the polyvinyl acetal resin in the second layer is 1% by mol or more.

[11] The interlayer film for laminated glass according to [9] or [10], comprising:

a third layer comprising a thermoplastic resin, wherein
the thermoplastic resin in the third layer is a polyvinyl acetal resin.

[12] Laminated glass comprising the interlayer film for laminated glass according to any one of [1] to [11], and two laminated glass members, wherein the interlayer film for laminated glass is placed between the two laminated glass

members.

## Advantageous Effects of Invention

In the present invention, even in a case where a silica particle is compounded in an interlayer film for laminated glass, the interlayer film for laminated glass can be lowered in haze value not only under an ordinary temperature environment, but also under a high-temperature environment, and can prevent laminated glass from being deteriorated in viewability, for example, in summer.

## Brief Description of Drawings

[Fig. 1] Fig. 1 is a cross-sectional view illustrating one example of an interlayer film for laminated glass, and laminated glass.
[Fig. 2] Fig. 2 is a cross-sectional view illustrating one example of an interlayer film for laminated glass, and laminated glass.
[Fig. 3] Fig. 3 is a cross-sectional view illustrating one example of an interlayer film for laminated glass, and laminated glass.
[Fig. 4] Fig. 4 is examples of a standard sample rated as "A" in flow mark evaluation are illustrated.
[Fig. 5] Fig. 5 is an example of a standard sample rated as "B" in flow mark evaluation is illustrated.
[Fig. 6] Fig. 6 is examples of a standard sample rated as "C" in flow mark evaluation are illustrated.

## Description of Embodiments

### <Interlayer film for laminated glass>

### [First layer]

The interlayer film for laminated glass of the present invention (hereinafter, sometimes simply referred to as "interlayer film") has a structure of one or two or more layers, and comprises a first layer comprising a thermoplastic resin and a silica particle. In the present invention, the silica particle comprised in the first layer has an average secondary particle size (d50) of 0.01 μm or more and 2.2 μm or less and a maximum particle size peak value of 20 μm or less.

The interlayer film for laminated glass which has the above configuration can be reduced in haze value not only under an ordinary temperature environment, but also under a high-temperature environment, and can prevent laminated glass from being deteriorated in viewability, for example, in summer, even if the silica particle is compounded in the interlayer film.

In the following description, the thermoplastic resin comprised in the first layer may be sometimes described as "thermoplastic resin (1)".

### (Silica particle)

The silica particle for use in the first layer has an average secondary particle size (d50) of 0.01 μm or more and 2.2 μm or less, as described above. When the average secondary particle size is more than 2.2 μm, an increase in haze value is caused due to an increase in difference in refractive index from the thermoplastic resin or a mixture of the thermoplastic resin and the plasticizer, in particular, under a high-temperature environment. When the average secondary particle size is less than 0.01 μm, the silica particle is difficult to produce, and there is caused any failure, for example, inability to enhance flexural rigidity even by compounding of the silica particle.

The average secondary particle size (d50) is preferably 2.0 μm or less, more preferably 1.9 μm or less, further preferably 1.5 μm or less, from the viewpoint that the haze value is made more excellent. The average secondary particle size of the silica particle is preferably 0.05 μm or more, more preferably 0.1 μm or more, further preferably 0.3 μm or more, from the viewpoint that the silica particle is easily obtained by pulverization described below.

The maximum particle size peak value of the silica particle for use in the first layer is 20 μm or less, as described above. When the maximum particle size peak value is more than 20 μm, the silica particle is at least partially increased in particle size, thereby not enabling the haze value, in particular, the haze value under a high-temperature environment to be favorable even when the average secondary particle size (d50) is in the above predetermined range. The maximum particle size peak value is preferably 15 μm or less, more preferably 10 μm or less, further preferably 8 μm or less, particularly preferably 3.5 μm or less, most preferably 2 μm or less, from the viewpoint that the haze value is made more

excellent.

The maximum particle size peak value is preferably 0.1 μm or more, more preferably 0.5 μm or more, further preferably 1.0 μm or more from the viewpoint that the silica particle is more easily produced by, for example, pulverization described below.

The minimum particle size peak value of the silica particle for use in the first layer is preferably 2.0 μm or less. When the minimum particle size peak value is 2.0 μm or less, the haze value, in particular, the haze value under a high-temperature environment can be reduced. The minimum particle size peak value of the silica particle is more preferably 1.9 μm or less, further preferably 1.5 μm or less, from the viewpoint that the haze value, in particular, the haze value under a high-temperature environment is made excellent. The minimum particle size peak value of the silica particle for use in the first layer is, for example, 0.01 μm or more. When the minimum particle size peak value is equal to or more than the lower limit value, production of the silica particle by, for example, pulverization described below is facilitated and there is hardly caused any failure, for example, inability to enhance flexural rigidity even by compounding of the silica particle. The minimum particle size peak value is preferably 0.05 μm or more, more preferably 0.1 μm or more, further preferably 0.15 μm or more from the above viewpoints.

The average secondary particle size of the silica particle may be determined by isolating the silica particle comprised in the first layer, dispersing it in water, and measuring the average value (d50) by particle size distribution measurement according to a laser diffraction method. Examples of the method for isolating the silica particle include a method involving dissolving the first layer in a solvent such as THF and performing separation by centrifugation.

The minimum particle size peak value and the maximum particle size peak value are determined respectively by defining the minimum value of the particle size, at which a peak is observed, as the minimum particle size peak value, and defining the maximum value of the particle size, at which a peak is observed, as the maximum particle size peak value, in a particle size distribution obtained in the particle size distribution measurement. In a case where only one peak is observed, the minimum particle size peak value and the maximum particle size peak value are the same values.

The amount of oil absorption of the silica particle is preferably 230 ml/100 g or more and 500 ml/100 g or less. When the amount of oil absorption is equal to or more than the lower limit value, a resin component, a plasticizer, and the like are easily attached onto a surface of the silica particle, the silica particle is easily miscible with the thermoplastic resin, or the thermoplastic resin and the plasticizer constituting the interlayer film, for example, even without surface treatment described below, and flexural rigidity is easily enhanced. When the amount of oil absorption is equal to or less than the upper limit value, the silica particle is easily produced and the thermoplastic resin can also be prevented from being excessively attached to the silica particle. The amount of oil absorption of the silica particle is more preferably 250 ml/100 g or more and 450 ml/100 g or less, further preferably 270 ml/100 g or more and 400 ml/100 g or less from the above viewpoints.

The amount of oil absorption denotes the amount of oil absorption of DBP in use of DBP as an adsorption component. The detail of the method for measuring the amount of oil absorption of DBP is as shown in Examples.

A plurality of types of such silica particles are present depending on, for example, the difference in production method, and examples include wet silica produced by a wet method and dry silica produced by a dry method. Examples of the dry silica include fumed silica. Examples of the wet silica include precipitated silica produced by a precipitation method, gel method silica produced by a gel method, and colloidal silica obtained by dispersing the silica particle in water. In particular, precipitated silica and gel method silica are preferable. The silica particle here used is preferably one present as an aggregate particle.

The precipitated silica and gel method silica for use in the interlayer film are each preferably one obtained by pulverization of an aggregate particle, and the average secondary particle size, the maximum particle size peak value and the minimum particle size peak value of such silica may be made each equal to or less than the above upper limit value by pulverization of an aggregate particle. The silica particle may be pulverized by either crushing or cracking. The cracking refers to partial breakage of an aggregate state of an aggregate particle, and the crushing refers to simple grinding of such a particle.

The silica particle is particularly preferably precipitated silica from the viewpoint that the average secondary particle size, the maximum particle size peak value and the minimum particle size peak value are adjusted in the ranges by pulverization.

The silica particle may be used singly or in combinations of two or more kinds thereof.

Examples of the method for pulverizing the silica particle include wet pulverization and dry pulverization, and dry pulverization is preferable, and dry pulverization of precipitated silica is particularly preferable from the viewpoint of being capable of easily pulverizing the silica particle. Since dry pulverization hardly causes the silica particle to be aggregated after pulverization, the average secondary particle size, the maximum particle size peak value and the minimum particle size peak value are each easily adjusted to be equal to or less than the upper limit value.

Specific methods of dry pulverization include a media mill and a media-less mill. Examples of the media mill include a bead mill, a ball mill and a planetary mill, and examples of the media-less mill include a deadweight collision type mill, a facing collision type mill and a jet mill. In particular, a jet mill is preferable, and a jet mill is preferably operated

at a high pressure.

Specific methods of wet pulverization include a method involving pulverizing the silica particle by a wet pulverizer in a state where the silica particle is dispersed in, for example, an organic solvent and/or a plasticizer. Examples of the wet pulverizer include a jet mill, a bead mill, a ball mill and a high-pressure wet atomizing apparatus. For example, a high-speed shear stirring apparatus is preferably used for dispersing of the silica particle.

The silica particle may be neither subjected to any surface treatment, nor covered with any organic compound, or may be subjected to a surface treatment according to a known method and covered with an organic compound. In a case where the silica particle is pulverized, the surface treatment may be performed after pulverization of the silica particle or before the pulverization. The surface treatment may be performed with a known surface treatment agent.

Suitable examples of the surface treatment agent include a silane coupling agent. The silane coupling agent is a compound having an alkoxysilyl group having a silicon atom and 1 to 3 alkoxy groups each covalently bound to the silicon atom. Examples of the alkoxy group include alkoxy groups having 1 to 4 carbon atoms, such as a methoxy group, an ethoxy group, an isopropoxy group, a n-butoxy group and a t-butoxy group, and an alkoxy group having 1 or 2 carbon atoms is preferable.

The silane coupling agent may be an alkoxysilane compound having one Si atom or two or more Si atoms in its molecule. In a case where the silane coupling agent has two or more Si atoms, examples include a condensate of the alkoxysilane compound.

The organosilicon compound has an organic functional group directly bound to a silicon atom. The organic functional group may be a hydrocarbon group, or may contain, for example, an epoxy group or an acrylic group. The organic functional group may have about 1 to 10 carbon atoms, preferably 1 to 6 carbon atoms. Examples of the hydrocarbon group include alkyl groups such as a methyl group and an ethyl group, alkenyl groups such as a vinyl group, and aryl groups such as a tolyl group, a phenyl group, a xylyl group, a benzyl group and a phenylethyl group. An epoxy group, an acrylic group, or the like may be appropriately bound to such one silicon atom via the hydrocarbon group.

The method for treating the silica particle with the surface treatment agent, for example, the silane coupling agent is not particularly limited as long as it is a method which can allow the surface treatment agent to be attached to a surface of the silica particle, and may be, for example, mixing of the surface treatment agent, for example, the silane coupling agent, or a solution thereof with the silica particle, or spraying of the surface treatment agent or a solution thereof to a surface of the silica particle. In a case where the solution of the surface treatment agent is attached to a surface of the silica particle, the solvent may be appropriately removed by, for example, drying. The surface treatment agent, which is in the state of being attached to the surface, may be, for example, heated to thereby allow a reaction of the surface treatment agent with the surface of the silica particle to progress.

The content of the silica particle in the first layer is preferably 1 part by mass or more, more preferably 5 parts by mass or more, further preferably 12 parts by mass or more, particularly preferably 15 parts by mass or more based on 100 parts by mass of the thermoplastic resin (1). When the content of the silica particle is equal to or more than the lower limit value, the first layer is enhanced in flexural rigidity. The content of the silica particle is preferably 70 parts by mass or less, more preferably 64 parts by mass or less, further preferably 60 parts by mass or less, still further preferably 55 parts by mass or less, still further preferably 45 parts by mass or less, particularly preferably 35 parts by mass or less, most preferably 25 parts by mass or less based on 100 parts by mass of the thermoplastic resin (1). The content of the silica particle is equal to or less than the upper limit, to result in a reduction in haze value and also an improvement in sound insulating performance, thereby enabling the occurrence of any flow mark to be suppressed.

(Tanδ)

The tanδ at 0.1 rad/s and 200°C of the first layer comprised in the interlayer film of the present invention is preferably 0.8 or more. While the first layer, which comprises the silica particle, thus easily causes a flow mark to occur, the tanδ at a lower frequency, of the first layer, can be 0.8 or more to thereby hardly cause a flow mark to be formed, resulting in an improvement in appearance of the interlayer film. Such a flow mark here means strip-shaped unevenness occurring on a surface or a layer interface of the interlayer film.

The tanδ is more preferably 0.85 or more, further preferably 0.93 or more, from the viewpoints of further suppression of the occurrence of any flow mark and further improvement in appearance of the interlayer film. The tanδ is, for example, 3.0 or less, preferably 2.0 or less, more preferably 1.5 or less from the viewpoint of, for example, enhancement in forming processability.

The tanδ can be appropriately adjusted by changing, for example, the type and the amount of the thermoplastic resin in the first layer, the type and the amount of the functional group in the thermoplastic resin, the type and the amount of the plasticizer, and the type and the amount of the silica particle. For example, use of wet silica easily increases the tanδ.

The tanδ can be measured by producing a sample from a resin composition for forming the first layer and performing viscoelasticity measurement in measurement conditions of a temperature of 200°C, a strain of 8% and a frequency range from 100 to 0.1 rad/s to determine the tanδ value at a frequency of 0.1 rad/s. The geometry of a

measurement tool here used corresponds to, for example, a parallel plate having a diameter of 8 mm.

A measurement sample is preferably produced by mixing components for forming the first layer to produce a resin composition, press forming the resin composition and then drying it in vacuum at 50°C for 2 hours or more. Alternatively, the sample also is preferably produced by peeling the first layer from the interlayer film, and press forming (for example, at 150°C for 10 minutes under no pressure and at 150°C for 10 minutes under pressure) the resultant and then drying it in vacuum at 50°C for 2 hours or more. The thickness of the sample is preferably 0.35 mm.

(Glass transition temperature)

The glass transition temperature of the first layer is preferably 15°C or less. When the glass transition temperature of the first layer is 15°C or less, the interlayer film is easily enhanced in sound insulating performance. The glass transition temperature of the first layer is more preferably 10°C or less, further preferably 5°C or less, particularly preferably 0°C or less from the viewpoint of a more enhancement in sound insulating performance. The glass transition temperature of the first layer is not particularly limited, and is preferably -20°C or more in order to improve flexural rigidity.

The glass transition temperature can be adjusted by changing, for example, the type and the amount of the thermoplastic resin in the first layer, and the type and the amount of the plasticizer. The glass transition temperature can also be adjusted by, for example, the type and the amount of the functional group in the thermoplastic resin. For example, an increase in amount of the plasticizer tends to lower the glass transition temperature. For example, in a case where a polyvinyl butyral resin is used, the glass transition temperature can be lowered by a decrease in amount of a hydroxyl group.

The method for measuring the glass transition temperature is measurement of the viscoelasticity of the interlayer film with a viscoelasticity measurement apparatus in a case where the interlayer film is of a single layer. In a case where the interlayer film is of multiple layers, a measurement sample is obtained by peeling the first layer from the interlayer film and press forming the first layer obtained, at 150°C. Thereafter, the viscoelasticity of the measurement sample obtained is measured with a viscoelasticity measurement apparatus. Such measurement is performed in a shear mode in a condition of a temperature rise from -30°C to 100°C at a rate of temperature rise of 3°C/min and in conditions of a frequency of 1 Hz and a strain of 1%.

(Haze value)

Both the haze values at 23°C and 80°C of the interlayer film for laminated glass are each preferably 0.8% or less, more preferably 0.7% or less, further preferably 0.5% or less. When both the haze values at 23°C and 80°C are reduced, viewability of laminated glass can be enhanced not only under a usual environment, but also under a high-temperature environment, for example, in summer.

The interlayer film for laminated glass, in which the first layer comprises the silica particle, can allow for a reduction in haze value both under an ordinary temperature and at a high temperature by use of a specified silica particle. The haze value can be determined by defining, as the haze value of the interlayer film for laminated glass, the haze value obtained by sandwiching the interlayer film between two sheets of clear float glass to produce laminated glass, and measuring the haze value of the laminated glass.

(Thermoplastic resin (1))

The first layer in the present invention comprises a thermoplastic resin. When the first layer comprises a thermoplastic resin, easily functions as an adhesion layer and is improved in adhesiveness to a laminated glass member such as a glass plate or other layer(s) of the interlayer film. The thermoplastic resin serves as a matrix component in the interlayer film, and, for example, the above silica particle is dispersed in the thermoplastic resin.

The thermoplastic resin is not particularly limited, and examples thereof include a polyvinyl acetal resin, an ethylene-vinyl acetate copolymer resin, an ethylene-acrylic acid copolymer resin, an ionomer resin, a polyurethane resin, a polyvinyl alcohol resin and a thermoplastic elastomer. When such a resin is used, adhesiveness to a laminated glass member is easily ensured. The thermoplastic resin in the interlayer film of the present invention may be used singly or in combinations of two or more kinds thereof.

In particular, at least one selected from a polyvinyl acetal resin and an ethylene-vinyl acetate copolymer resin is preferable, and a polyvinyl acetal resin is more preferable because excellent adhesiveness to glass is exhibited particularly in the case of use in combination with a plasticizer. In the following description, the polyvinyl acetal resin comprised in the first layer may be sometimes described as "polyvinyl acetal resin (1)". The detail of the polyvinyl acetal resin (1) is described below.

(Plasticizer (1))

The first layer in the present invention further preferably comprises a plasticizer. The plasticizer comprised in the first layer is sometimes referred to as "plasticizer (1)". The first layer, which comprises the plasticizer (1), thus is flexible, resulting in an enhancement in flexibility of laminated glass and easy enhancements in penetration resistance and sound insulating performance. Furthermore, high adhesiveness to a laminated glass member or other layer(s) in the interlayer film can also be exhibited. The plasticizer (1) is particularly effectively comprised in a case where the polyvinyl acetal resin (1) is used as the thermoplastic resin. The detail of the plasticizer (1) is described below.

The content (hereinafter, sometimes designated as "content (1)") of the plasticizer (1) based on 100 parts by mass of the thermoplastic resin (1) in the first layer is, for example, 20 parts by mass or more, and is preferably 50 parts by mass or more, more preferably 55 parts by mass or more, further preferably 60 parts by mass or more. The content (1) of the plasticizer (1) is preferably 100 parts by mass or less, more preferably 90 parts by mass or less, further preferably 85 parts by mass or less, particularly preferably 80 parts by mass or less. When the content (1) is equal to or more than the lower limit, the interlayer film is enhanced in flexibility and the interlayer film is easily handled. When the content (1) is equal to or less than the upper limit, penetration resistance of laminated glass is much more enhanced. While laminated glass using an interlayer film where the content (1) is 55 parts by mass or more tends to be low in flexural rigidity, the first layer comprises the silica particle to thereby sufficiently improve such flexural rigidity. Furthermore, sound insulating performance is also easily improved.

The thermoplastic resin, or the thermoplastic resin and the plasticizer serve(s) as main component(s) in the first layer, and the total amount of the thermoplastic resin and the plasticizer based on the total amount of the first layer is preferably 60% by mass or more, more preferably 70% by mass or more, further preferably 80% by mass or more and less than 100% by mass.

The first layer may, if necessary, comprise additive(s) other than the plasticizer, such as an infrared absorber, an ultraviolet absorber, an antioxidant, a light stabilizer, a fluorescent whitener, a crystal nucleator, a dispersant, a dye, a pigment, a carboxylic acid metal salt and/or a heat shield material.

[Layer configuration]

The interlayer film of the present invention may be composed of a single layer of the first layer, and may have a one-layer structure. In an interlayer film 10 of a one-layer structure as illustrated in Fig. 1, both one surface of a first layer 11 and a surface thereof, located opposite to the one surface serve as adhesion surfaces for adhesion to laminated glass members 21 and 22 for constituting laminated glass 20.

The interlayer film 10 is preferably an interlayer film 10 comprising a second layer 12 in addition to the first layer 11, as illustrated in Fig. 2. The second layer is provided on one surface of the first layer 11. When the interlayer film 10 comprises the second layer 12 in addition to the first layer 11, laminated glass is easily enhanced in both sound insulating performance and flexural rigidity.

The second layer is a layer comprising a thermoplastic resin. The thermoplastic resin comprised in the second layer 12 is sometimes referred to as "thermoplastic resin (2)". The interlayer film 10 may have a two-layer structure composed of the first and second layers 11 and 12, as illustrated in Fig. 2. In the configuration illustrated in Fig. 2, a surface of the second layer 12, located opposite to the first layer 11 side, and a surface of the first layer 11, located opposite to the second layer 12 side, may serve as adhesion surfaces for adhesion to the laminated glass members 21 and 22.

The interlayer film 10 more preferably comprises both second and third layers 12 and 13 in addition to the first layer 11, as illustrated in Fig. 3. The third layer 13 is a layer comprising a thermoplastic resin. The thermoplastic resin comprised in the third layer 13 is sometimes referred to as "thermoplastic resin (3)".

The third layer 13 is provided on a surface (another surface) side of the first layer 11, located opposite to the one surface on which the second resin layer 12 is provided. When the interlayer film 10 comprises the second and third layers 12 and 13 in addition to the first layer 11, sound insulating performance and flexural rigidity are much more easily enhanced. In the configuration in Fig. 3, the second and third layers 12 and 13 may each constitute a surface layer in the interlayer film 10. In other words, a surface of the second layer 12, located opposite to the first layer 11 side, and a surface of the third layer 13, located opposite to the first layer 11, may serve as surfaces for adhesion to the laminated glass members 21 and 22.

In each of the above configurations, other layer(s) may be placed respectively between the second layer 12 and the first layer 11 and between the first layer 11 and the third layer 13. Such other layer(s) may be, for example, a polyethylene terephthalate film, or may be, for example, an adhesion layer or the like. It is noted that the second layer 12 and the first layer 11, and the first layer 11 and the third layer 13 are preferably directly laminated.

(Glass transition temperatures of second and third layers)

The glass transition temperature of the first layer in the interlayer film having a multiple-layer structure is preferably lower than the glass transition temperature of the second layer, more preferably lower than the glass transition temperatures of both the second and third layers. In the present invention, the first layer comprising the silica particle is provided and the second layer or the second and third layers which is/are higher in glass transition temperature than the glass transition temperature of the first layer is/are provided, and thus not only sound insulating performance is improved, but also flexural rigidity of laminated glass can be much more enhanced.

The absolute value of the difference between the glass transition temperature of the first layer and the glass transition temperature(s) of the second layer or the second and third layers is preferably 10°C or more, more preferably 20°C or more, further preferably 30°C or more, particularly preferably 35°C or more, from the viewpoint of much more enhancements in flexural rigidity and sound insulating performance of laminated glass. The absolute value of the difference between the glass transition temperature of the first layer and the glass transition temperature(s) of the second layer or the second and third layers is preferably 70°C or less from the viewpoint of enhancement in handleability.

The glass transition temperature(s) of the second layer or the second and third layers is/are preferably 0°C or more. When the glass transition temperature(s) of the second layer or the second and third layers is/are 0°C or more, the difference in glass transition temperature from the first layer is easily increased, and handleability and penetration resistance are easily enhanced. The glass transition temperature(s) of the second layer or the second and third layers is more preferably 10°C or more, further preferably 20°C or more, particularly preferably 30°C or more, from such viewpoints. The glass transition temperature(s) of the second layer or the second and third layers is/are not particularly limited, and is/are, for example, 60°C or less, more preferably 50°C or less.

(Thermoplastic resins (2) and (3))

The respective thermoplastic resins (2) and (3) for use in the second layer and the third layer are not particularly limited, and can be appropriately selected from resins each listed above as the thermoplastic resin usable as the thermoplastic resin (1), and thus can be used. The respective thermoplastic resins for use in the thermoplastic resins (2) and (3) may be each used singly or in combinations of two or more kinds thereof.

The thermoplastic resins (2) and (3) are each preferably at least one selected from a polyvinyl acetal resin and an ethylene-vinyl acetate copolymer resin, and more preferably a polyvinyl acetal resin because excellent adhesiveness to glass is exhibited particularly in the case of use in combination with a plasticizer. In other words, in the present invention, the thermoplastic resin (1) and (2) are each preferably a polyvinyl acetal resin, and the thermoplastic resins (1), (2) and (3) are each more preferably a polyvinyl acetal resin.

In the following description, respective polyvinyl acetal resins comprised in the second layer and the third layer are sometimes described as "polyvinyl acetal resin (2)" and "polyvinyl acetal resin (3)". The details of the polyvinyl acetal resin (2) and the polyvinyl acetal resin (3) are described below.

The polyvinyl acetal resin (2), or the polyvinyl acetal resins (2) and (3) may be each the same as the polyvinyl acetal resin (1), and is/are preferably different therefrom from the viewpoint of enhancement in sound insulating performance. The polyvinyl acetal resins (2) and (3) may be polyvinyl acetal resins which are different from each other, and are preferably polyvinyl acetal resins which are the same as each other from the viewpoint of, for example, productivity.

(Plasticizers (2) and (3))

The second layer preferably comprises a plasticizer, and the third layer also preferably comprises a plasticizer. In other words, in the interlayer film, both the first and second layers each preferably comprise a plasticizer, and all the first, second and third layers each further preferably comprise a plasticizer. The respective plasticizers comprised in the second and third layers are sometimes referred to as "plasticizer (2)" and "plasticizer (3)".

The second and third layers each comprise a plasticizer and thus are flexible to result in not only enhancement in flexibility of laminated glass, but also enhancement in penetration resistance thereof. Furthermore, high adhesiveness to a laminated glass member such as a glass plate or other layer(s) in the interlayer film can also be exhibited. Also in a case where polyvinyl acetal resins (2) and (3) are respectively used as the thermoplastic resins in the second and third layers, it is particularly effective to comprise a plasticizer. The plasticizers (2) and (3) may be each the same as or different from the plasticizer (1). The plasticizers (2) and (3) may be the same as or different from each other. The plasticizer (2) and the plasticizer (3) may be each used singly or in combinations of two or more kinds thereof.

The content (hereinafter, sometimes designated as "content (2)") of the plasticizer (2) based on 100 parts by mass of the thermoplastic resin (2) in the second layer, and the content (hereinafter, "content (3)") of the plasticizer (3) based on 100 parts by mass of the thermoplastic resin (3) in the third layer are each preferably 10 parts by mass or more. When the content (2) and the content (3) are each equal to or more than the lower limit, the interlayer film is

enhanced in flexibility and the interlayer film is easily handled. The content (2) and the content (3) are each more preferably 15 parts by mass or more, further preferably 20 parts by mass or more, particularly preferably 24 parts by mass or more from the above viewpoints.

The content (2) and the content (3) are each preferably 45 parts by mass or less, more preferably 40 parts by mass or less, further preferably 35 parts by mass or less. When the content (2) and the content (3) are each equal to or less than the upper limit, flexural rigidity is enhanced.

The content (1) of the plasticizer in the first layer is preferably higher than the content (2) and preferably higher than the content (3), further preferably higher than both the contents (2) and (3), in order to enhance sound insulating performance of laminated glass.

The absolute value of the difference between the content (2) and the content (1), and the absolute value of the difference between the content (3) and the content (1) are each preferably 10 parts by mass or more, more preferably 15 parts by mass or more, further preferably 25 parts by mass or more, from the viewpoint of a much more enhancement in sound insulating performance of laminated glass. The absolute value of the difference between the content (2) and the content (1), and the absolute value of the difference between the content (3) and the content (1) are each preferably 80 parts by mass or less, more preferably 70 parts by mass or less, further preferably 60 parts by mass or less.

The thermoplastic resin, or the thermoplastic resin and the plasticizer serve(s) as main component(s) in each of the second and third layers, and the total amount of the thermoplastic resin and the plasticizer, relative to the second layer or the third layer, is usually 70% by mass or more, preferably 80% by mass or more, further preferably 90% by mass or more and 100% by mass or less.

The second and third layers may, if necessary, each comprise additive(s) other than the plasticizer, such as an infrared absorber, an ultraviolet absorber, an antioxidant, a light stabilizer, a fluorescent whitener, a crystal nucleator, a dispersant, a dye, a pigment, a carboxylic acid metal salt and/or a heat shield material.

(Thickness of interlayer film)

The thickness of the interlayer film is not particularly limited, and is preferably 0.1 mm or more and 3.0 mm or less. When the thickness of the interlayer film is 0.1 mm or more, for example, adhesiveness of the interlayer film and penetration resistance of laminated glass can be improved. When the thickness is 3.0 mm or less, transparency is easily ensured. The thickness of the interlayer film is more preferably 0.2 mm or more, further preferably 0.3 mm or more, and more preferably 2.0 mm or less, further preferably 1.5 mm or less.

In the case of a multiple-layer structure, the thickness of the first layer is preferably 0.0625 T or more and 0.4 T or less under the assumption that the thickness of the entire interlayer film is T. When the thickness of the first layer is 0.4 T or less, flexural rigidity is easily improved. When the thickness is 0.0625 T or more, sound insulating performance is easily exhibited. The thickness of the first layer is more preferably 0.1 T or more, and more preferably 0.375 T or less, further preferably 0.25 T or less, still further preferably 0.15 T or less.

The respective thicknesses of the second layer and the third layer are each preferably 0.3 T or more and 0.9375 T or less. When the thickness of the second layer or the third layer, or the thicknesses of both the layers is/are in the range, flexural rigidity and sound insulating performance of laminated glass are more enhanced. The respective thicknesses of the second layer and the third layer are each more preferably 0.3125 T or more, further preferably 0.375 T or more, and more preferably 0.9 T or less, and may be each 0.46875 T or less or 0.45 T or less.

The total thickness of the second layer and the third layer is preferably 0.625 T or more and 0.9375 T or less. When the total thickness is in the range, rigidity and sound insulating performance of laminated glass are enhanced. The total thickness of the second layer and the third layer is more preferably 0.75 T or more, further preferably 0.85 T or more, and more preferably 0.9 T or less.

(Young's modulus)

The Young's modulus at 25°C of the first layer is preferably 0.45 MPa or more, more preferably 0.6 MPa or more, further preferably 0.65 MPa or more. When the Young's modulus is equal to or more than the lower limit, flexural rigidity of laminated glass can be enhanced. When the first layer comprises the silica particle, the Young's modulus can be relatively high even in a decrease in amount of a hydroxyl group in the polyvinyl acetal resin (1) or an increase in amount of the plasticizer, comprised in the first layer. The Young's modulus at 25°C of the first layer is preferably 6 MPa or less, more preferably 5 MPa or less, further preferably 4 MPa or less. When the Young's modulus is equal to or less than the upper limit, laminated glass easily ensures sound insulating performance.

The respective Young's moduli at 25°C of the second layer and the third layer are each preferably 3 MPa or more, more preferably 10 MPa or more, further preferably 25 MPa or more. When the Young's moduli are each equal to or more than the lower limit, flexural rigidity of laminated glass can be enhanced. The respective Young's moduli at 25°C of the second layer and the third layer are preferably 700 MPa or less, more preferably 400 MPa or less, further

preferably 200 MPa or less from the viewpoint of handleability.

The Young's modulus can be obtained by producing a test piece having a thickness of about 800 μm, from a resin composition for formation of each layer, subjecting the test piece to a tensile test at 200 mm/min in a constant temperature room at 25°C, and determining the slope in a minute strain region with respect to a stress-strain curve obtained. A specific measurement method is as described in Examples. In a case where a thickness of about 800 μm is not achieved with respect to each layer, a stress-strain curve is obtained by conversion from the thickness of the test piece used.

A test piece may be produced by mixing components for forming the first layer to produce a resin composition, and press forming and then punching the resin composition. Alternatively, the test piece may also be produced by peeling the first layer from the interlayer film, and press forming (for example, at 150°C for 10 minutes under no pressure and then at 150°C for 10 minutes under pressure) and then punching the resultant. Each test piece of the second and third layers can also be produced in the same manner.

(Equivalent rigidity)

The equivalent rigidity at 25°C of the interlayer film is preferably 4 MPa or more, more preferably 5 MPa or more, further preferably 5.5 MPa or more, and preferably 30 MPa or less, more preferably 20 MPa or less, further preferably 15 MPa or less, from the viewpoint of enhancement in flexural rigidity of laminated glass. The method for measuring the equivalent rigidity is as described in Examples.

(Detail of polyvinyl acetal resin)

Hereinafter, the details of the respective polyvinyl acetal resins for use in the first, second and third layers are described. In the following description, the configuration common to the respective polyvinyl acetal resins for use in the first, second and third layers is described simply in terms of "polyvinyl acetal resin". Respective individual configurations of the polyvinyl acetal resins for use in the first, second and third layers are described in terms of "polyvinyl acetal resin (1)", "polyvinyl acetal resin (2)" and "polyvinyl acetal resin (3)".

The polyvinyl acetal resin is obtained by acetalization of polyvinyl alcohol (PVA) with aldehyde. In other words, the polyvinyl acetal resin is preferably an acetalized product of polyvinyl alcohol (PVA). Polyvinyl alcohol (PVA) is obtained by saponification of, for example, polyvinyl ester such as polyvinyl acetate. The degree of saponification of polyvinyl alcohol is generally 70 to 99.9% by mol. The polyvinyl acetal resin may be used singly or in combinations of two or more kinds thereof. Herein, respective PVAs for obtaining the polyvinyl acetal resins (1), (2) and (3) may be described as PVAs (1),(2) and (3) in the following description.

The average degree of polymerization of PVA (1) is preferably 200 or more, more preferably 500 or more, further preferably 1500 or more, still further preferably 2600 or more. When the average degree of polymerization is equal to or more than the lower limit, penetration resistance of laminated glass is enhanced. The average degree of polymerization of polyvinyl alcohol (PVA) is preferably 5000 or less, more preferably 4000 or less, further preferably 3500 or less. When the average degree of polymerization is equal to or less than the upper limit, forming of the interlayer film is facilitated.

The respective average degrees of polymerization of PVAs (2) and (3) are each preferably 200 or more, more preferably 500 or more, further preferably 1000 or more, still further preferably 1500 or more. When each such average degree of polymerization is equal to or more than the lower limit, penetration resistance of laminated glass is enhanced. The average degree of polymerization of polyvinyl alcohol (PVA) is preferably 5000 or less, more preferably 4000 or less, further preferably 3500 or less, still further preferably 2500 or less. When the average degree of polymerization is equal to or less than the upper limit, forming of the interlayer film is facilitated.

The average degree of polymerization of PVA (1) is preferably more than the average degree(s) of polymerization of PVA (2) or PVAs (2) and (3). When the average degree of polymerization of PVA (1) in the polyvinyl acetal resin is increased, the occurrence of foaming and the growth of foaming in laminated glass can be suppressed.

The difference between the average degree of polymerization of PVA (1) and the average degree of polymerization of PVA (2), and the difference between the average degree of polymerization of PVA (1) and the average degree of polymerization of PVA (3) are each preferably 100 or more, preferably 500 or more, further preferably 1000 or more, and preferably 2000 or less, more preferably 1500 or less, from the viewpoint that the occurrence of foaming and the growth of foaming in laminated glass are suppressed.

The average degree of polymerization of polyvinyl alcohol is determined by a method according to JIS K6726 "polyvinyl alcohol test method".

The aldehyde for use in acetalization is not particularly limited, however an aldehyde having 1 to 10 carbon atoms is preferably used. An aldehyde having 3 to 5 carbon atoms is more preferable, an aldehyde having 4 or 5 carbon atoms is further preferable, and an aldehyde having 4 carbon atoms is particularly preferable.

The aldehyde having 1 to 10 carbon atoms is not particularly limited, and examples thereof include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde and benzaldehyde. In particular, acetaldehyde, propionaldehyde, n-butyraldehyde, isobutyraldehyde, n-hexylaldehyde or n-valeraldehyde is preferable, propionaldehyde, n-butyraldehyde, isobutyraldehyde or n-valeraldehyde is more preferable, n-butyraldehyde or n-valeraldehyde is further preferable, and n-butyraldehyde is most preferable. The aldehyde may be used singly or in combinations of two or more kinds thereof.

The number of carbon atoms in an acetal group contained in the polyvinyl acetal resin is not particularly limited, and is preferably 1 to 10, more preferably 3 to 5, further preferably 4 or 5, particularly preferably 4. A specific acetal group is particularly preferably a butyral group, and accordingly, the polyvinyl acetal resin is preferably a polyvinyl butyral resin. In other words, in the present invention, the thermoplastic resin (1) in the first resin layer is preferably a polyvinyl butyral resin, both the thermoplastic resins (1) and (2) in the first and second resin layers are more preferably polyvinyl butyral resins, and all the thermoplastic resins (1), (2) and (3) in the first, second and third resin layers are further preferably polyvinyl butyral resins.

The content rate (amount of hydroxyl group) of a hydroxyl group in the polyvinyl acetal resin (1) is preferably 17% by mol or more, more preferably 20% by mol or more, and preferably 30% by mol or less, more preferably 27% by mol or less, further preferably 25% by mol or less, particularly preferably 24% by mol or less. When the content rate of the hydroxyl group is equal to or more than the lower limit, the interlayer film is much more increased in adhesion force. When the content rate of the hydroxyl group is equal to or less than the upper limit, the polyvinyl acetal resin (1) easily absorbs the plasticizer to much more enhance sound insulating performance of laminated glass. In particular, the content rate of a hydroxyl group in the polyvinyl acetal resin (1) is 20% by mol or more, resulting in a high reaction efficiency and excellent productivity, and the content rate is less than 27% by mol, resulting in a much more enhancement in sound insulating performance of laminated glass.

The respective content rates of hydroxyl groups in the polyvinyl acetal resin (2) and the polyvinyl acetal resin (3) are each preferably 25% by mol or more, more preferably 28% by mol or more, further preferably 30% by mol or more, still further preferably 32% by mol or more, particularly preferably 33% by mol or more. When the respective content rates of the hydroxyl groups are each equal to or more than the lower limit, not only sound insulating performance is kept, but also flexural rigidity can be much more enhanced. The respective content rates of hydroxyl groups in the polyvinyl acetal resin (2) and the polyvinyl acetal resin (3) are each preferably 38% by mol or less, more preferably 37% by mol or less, further preferably 36% by mol or less. When the respective content rates of the hydroxyl groups are each equal to or less than the upper limit, each polyvinyl acetal resin is easily precipitated in synthesis of such polyvinyl acetal resin.

The content rate of a hydroxyl group in the polyvinyl acetal resin (1) is preferably lower than the content rate of a hydroxyl group in the polyvinyl acetal resin (2), from the viewpoint of a much more enhancement in sound insulating performance. The content rate of a hydroxyl group in the polyvinyl acetal resin (1) is preferably lower than the content rate of a hydroxyl group in the polyvinyl acetal resin (3), from the viewpoint of a much more enhancement in sound insulating performance. The respective absolute values of the differences between the content rate of a hydroxyl group in the polyvinyl acetal resin (1) and the content rates of hydroxyl groups in the polyvinyl acetal resins (2) and (3) are each preferably 1% by mol or more. Thus, sound insulating performance can be much more enhanced. The absolute value of the difference between the respective content rates of the hydroxyl groups is more preferably 5% by mol or more, further preferably 8% by mol or more, particularly preferably 10% by mol or more, from the above viewpoints. The absolute value of the difference between the respective content rates of the hydroxyl groups is preferably 20% by mol or less.

The content rate of a hydroxyl group in the polyvinyl acetal resin is the value obtained by expressing a molar fraction as a percentage, the molar fraction being determined by dividing the amount of an ethylene group to which a hydroxyl group is bound, by the amount of the entire ethylene group in a main chain. The amount of an ethylene group to which a hydroxyl group is bound can be measured according to, for example, JIS K6728 "polyvinyl butyral test method".

The degree of acetalization of the polyvinyl acetal resin (1) is preferably 47% by mol or more, more preferably 60% by mol or more, and preferably 85% by mol or less, more preferably 80% by mol or less, further preferably 75% by mol or less. When the degree of acetalization is equal to or more than the lower limit, compatibility between the polyvinyl acetal resin (1) and the plasticizer is enhanced. When the degree of acetalization is equal to or less than the upper limit, the amount of the remaining aldehyde in the resin can be decreased. The degree of acetalization means the degree of butyralization in a case where the acetal group is a butyral group and the polyvinyl acetal resin (1) is a polyvinyl butyral resin.

The respective degrees of acetalization (degrees of butyralization in the case of a polyvinyl butyral resin) of the polyvinyl acetal resin (2) and the polyvinyl acetal resin (3) are each preferably 55% by mol or more, more preferably 60% by mol or more, and preferably 75% by mol or less, more preferably 71% by mol or less. When the degree of acetalization is equal to or more than the lower limit, compatibility between the polyvinyl acetal resin and the plasticizer

is enhanced. When the degree of acetalization is equal to or less than the upper limit, the amount of the remaining aldehyde in the resin can be decreased.

Each of the degrees of acetalization is the value obtained by expressing a molar fraction as a percentage, the molar fraction being determined by dividing the value obtained by subtracting the amount of an ethylene group to which a hydroxyl group is bound and the amount of an ethylene group to which an acetyl group is bound, from the amount of the entire ethylene group in a main chain, by the amount of the entire ethylene group in a main chain. Each such degree of acetalization (degree of butyralization) is preferably calculated from the result measured by a method according to JIS K6728 "polyvinyl butyral test method".

The degree of acetylation (amount of acetyl group) of the polyvinyl acetal resin (1) is preferably 0.01% by mol or more, more preferably 0.1% by mol or more, further preferably 7% by mol or more, particularly preferably 9% by mol or more, and preferably 30% by mol or less, more preferably 25% by mol or less, further preferably 24% by mol or less, particularly preferably 20% by mol or less. When the degree of acetylation is equal to or more than the lower limit, compatibility between the polyvinyl acetal resin and the plasticizer is enhanced. When the degree of acetylation is equal to or less than the upper limit, the interlayer film and laminated glass are enhanced in moisture resistance.

The respective degrees of acetylation of the polyvinyl acetal resin (2) and the polyvinyl acetal resin (3) are each preferably 10% by mol or less, more preferably 2% by mol or less. When the degrees of acetylation are each equal to or less than the upper limit, the interlayer film and laminated glass are enhanced in moisture resistance. The degrees of acetylation are not particularly limited, and are each preferably 0.01% by mol or more.

Each of the degrees of acetylation is the value obtained by expressing a molar fraction as a percentage, the molar fraction being determined by dividing the amount of an ethylene group to which an acetyl group is bound, by the amount of the entire ethylene group in a main chain. The amount of an ethylene group to which an acetyl group is bound can be measured according to, for example, JIS K6728 "polyvinyl butyral test method".

(Detail of plasticizer)

Hereinafter, the details of the respective plasticizers for use in the first, second and third resin layers are described. In the following description, the plasticizers (1), (2) and (3) for use in the first, second and third resin layers are collectively described.

Examples of such plasticizers for use in the first, second and third resin layers include organic ester plasticizers such as a monobasic organic acid ester and a polybasic organic acid ester, and phosphoric acid plasticizers such as an organic phosphate plasticizer and an organic phosphite plasticizer. In particular, an organic ester plasticizer is preferable. The plasticizer is preferably a liquid plasticizer. The liquid plasticizer is a plasticizer which is liquid at ordinary temperature (23°C) and ordinary pressure (1 atm).

Examples of the monobasic organic acid ester include an ester of glycol and monobasic organic acid. Examples of the glycol include polyalkylene glycol where each alkylene unit has 2 to 4 carbon atoms, preferably 2 or 3 carbon atoms, and the number of such alkylene units repeated is 2 to 10, preferably 2 to 4. The glycol may also be a monoalkylene glycol where the number of carbon atoms is 2 to 4, preferably 2 or 3, and the number of repeating units is 1.

Specific examples of the glycol include ethylene glycol, diethylene glycol, triethylene glycol, tetraethylene glycol, propylene glycol, dipropylene glycol, tripropylene glycol, tetrapropylene glycol and butylene glycol.

Examples of the monobasic organic acid include an organic acid having 3 to 10 carbon atoms, and specifically include butyric acid, isobutyric acid, caproic acid, 2-ethylbutyric acid, 2-ethylpentanoic acid, heptylic acid, n-octylic acid, 2-ethylhexylic acid, n-nonylic acid and decylic acid.

A preferable monobasic organic acid ester is, for example, a compound represented by the following formula (1):

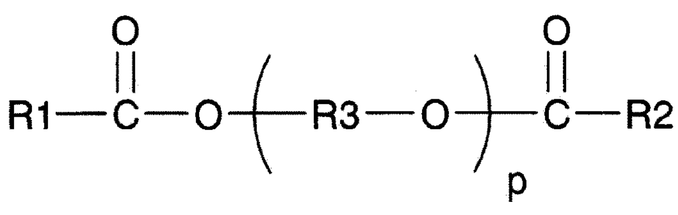

···(1)

wherein R1 and R2 each represent an organic group having 2 to 10 carbon atoms, R3 represents an ethylene group, an isopropylene group or a n-propylene group, and p represents an integer of 3 to 10. In the formula (1), R1 and R2 each preferably have 5 to 10 carbon atoms, more preferably 6 to 10 carbon atoms. The organic groups of R1 and R2 are each preferably a hydrocarbon group, more preferably an alkyl group.

Specific examples of the glycol ester include ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol dicaprylate, diethylene glycol di-2-ethylhexanoate, dipropylene glycol di-2-ethylbutyrate, triethylene glycol di-2-ethylhexanoate, triethylene glycol dicaprylate, triethylene glycol di-2-ethylpentanoate, triethylene glycol di-n-heptanoate, triethylene glycol di-2-ethylbutyrate, triethylene glycol di-2-ethyl propanoate, tetraethylene glycol di-n-heptanoate, tetraethylene glycol di-2-ethylhexanoate and tetraethylene glycol di-2-ethylbutyrate.

Examples of the polybasic organic acid ester include an ester compound of a dibasic organic acid having 4 to 12 carbon atoms, such as adipic acid, sebacic acid or azelaic acid, with an alcohol having 4 to 10 carbon atoms. The alcohol having 4 to 10 carbon atoms may be straight, may have a branched structure, or may have a cyclic structure.

Specific examples include dibutyl sebacate, dioctyl azelate, dihexyl adipate, dioctyl adipate, hexylcyclohexyl adipate, diisononyl adipate, heptylnonyl adipate, di-(2-butoxyethyl)adipate, dibutylcarbitol adipate and mixed adipate. For example, oil-modified sebacic acid alkyd may also be adopted. Examples of the mixed adipate include an adipate produced from two or more alcohols selected from an alkyl alcohol having 4 to 9 carbon atoms and a cyclic alcohol having 4 to 9 carbon atoms.

Examples of the organic phosphate plasticizer include phosphoric acid esters such as tributoxyethyl phosphate, isodecylphenyl phosphate and triisopropyl phosphate.

The plasticizer may be used singly or in combinations of two or more kinds thereof.

The plasticizer is, in particular, preferably selected from di-(2-butoxyethyl)adipate (DBEA), triethylene glycol di-2-ethylhexanoate (3GO), triethylene glycol di-2-ethylbutyrate (3GH) and triethylene glycol di-2-ethylpropanoate, more preferably selected from triethylene glycol di-2-ethylhexanoate (3GO), triethylene glycol di-2-ethylbutyrate (3GH) and triethylene glycol di-2-ethylpropanoate, further preferably selected from triethylene glycol di-2-ethylhexanoate and triethylene glycol di-2-ethylbutyrate, particularly preferably triethylene glycol di-2-ethylhexanoate.

(Method for producing interlayer film)

The interlayer film of the present invention, when having a single-layer structure, can be produced by forming the first layer by subjecting a resin composition comprising the thermoplastic resin, the silica particle, further the plasticizer compounded, if necessary, and other additive(s) to a known forming method such as extrusion or press forming. The resin composition is obtained by mixing components constituting the resin composition. In a case where the resin composition comprises the plasticizer, a dispersion liquid in which the silica particle is dispersed in the plasticizer in advance may be produced and the dispersant may be mixed with other components such as the thermoplastic resin to thereby obtain the resin composition.

The interlayer film, when having a multiple-layer structure, can be formed by forming each of the layers (for example, first resin layer, second resin layer, and third resin layer) constituting the interlayer film, from the resin composition, and then laminating each such layer. The interlayer film may also be formed by forming each of the layers constituting the interlayer film, by, for example, co-extrusion, and laminating each such layer. In the case of a multiple-layer structure, not only the resin composition for forming the first layer, but also a resin composition for forming the second layer, or respective resin compositions for forming the second layer and the third layer may be prepared.

The second layer and the third layer each preferably comprise the same polyvinyl acetal resin, and the second layer and the third layer each more preferably comprise the same polyvinyl acetal resin and the same plasticizer, because production efficiency of the interlayer film is excellent. The second layer and the third layer are each further preferably formed from the same resin composition.

<Laminated glass>

The present invention further provides laminated glass. The laminated glass of the present invention comprises two laminated glass members and the above interlayer film of the present invention, placed between the two laminated glass members. The two laminated glass members may be bonded with the interlayer film being interposed.

As illustrated in Figs. 1 to 3, laminated glass members 21 and 22 are respectively laminated on both surfaces of an interlayer film 10 in laminated glass 20. For example, in a case where the interlayer film 10 is composed of a single-layer structure of a first layer 11 as illustrated in Fig. 1, the laminated glass members 21 and 22 may be respectively laminated on both surfaces of the first layer 11.

In a configuration where the interlayer film 10 comprises the first layer 11 and a second layer 12 as illustrated in Fig. 2, such one laminated glass member 21 may be laminated on a surface of the second layer 12 and such other laminated glass member 22 may be laminated on a surface of the first layer 11. In a configuration where the interlayer film 10 comprises the first layer 11, the second layer 12 and a third layer 13, as illustrated in Fig. 3, such one laminated glass member 21 may be laminated on a surface of the second layer 12 and such other laminated glass member 22 may be laminated on a surface of the third layer 13.

(Laminated glass member)

Examples of such laminated glass members for use in the laminated glass include a glass plate and a resin film such as a PET (polyethylene terephthalate) film. The laminated glass encompasses not only laminated glass where the interlayer film is sandwiched between two glass plates, but also laminated glass where the interlayer film is sandwiched between a glass plate and a resin film such as a PET film. The laminated glass is preferably a laminate comprising a glass plate, in which at least one glass plate is used.

The glass plate may be either inorganic glass or organic glass, and inorganic glass is preferable. The inorganic glass is not particularly limited, and examples thereof include clear glass, clear float glass, float plate glass, reinforced glass, colored glass, polished plate glass, figured glass, meshed plate glass, wired plate glass, ultraviolet absorption plate glass, infrared reflection plate glass, infrared absorption plate glass and green glass.

The organic glass here used is one generally called resin glass and is not particularly limited, and examples thereof include organic glass formed from, for example, a polycarbonate plate, a polymethyl methacrylate plate or a polyester plate.

The respective materials forming the two laminated glass members may be the same as or different from each other. For example, one thereof may be inorganic glass and other thereof may be organic glass, and preferably both the two laminated glass members are inorganic glass or organic glass.

The respective thicknesses of the laminated glass members are each preferably 0.03 mm or more and 5 mm or less, more preferably 0.5 mm or more and 3 mm or less. In a case where the laminated glass members are each a glass plate, the thickness of the glass plate is preferably 0.5 mm or more and 5 mm or less, more preferably 0.7 mm or more and 3 mm or less. In a case where the laminated glass members are each a resin film such as a PET film, the thickness of the resin film is preferably 0.03 mm or more and less than 0.5 mm.

The interlayer film according to the present invention can be used to thereby enhance flexural rigidity of the laminated glass even when the laminated glass is thin in thickness. The thickness of the glass plate is preferably 3.5 mm or less, more preferably 3.0 mm or less, further preferably 2.5 mm or less from the viewpoints of a reduction in weight of the laminated glass, a reduction in environmental load due to a decrease of the material of the laminated glass, and a reduction in environmental load due to a reduction in weight of the laminated glass and thus enhancement in fuel efficiency of an automobile.

The method for producing the laminated glass is not particularly limited. For example, the interlayer film is sandwiched between the two laminated glass members, and these members are allowed to pass through a pressing roll or are placed in a rubber bag and evacuated under reduced pressure, to thereby allow air remaining between the two laminated glass members and the interlayer film to be degassed. Thereafter, the glass members are preliminarily bonded with the interlayer film at about 70 to 110°C, to obtain a laminate. Next, the laminate is placed in an autoclave or pressed, and then is compression bonded at about 120 to 150°C and at a pressure of 1 to 1.5 MPa. Thus, the laminated glass can be obtained. In production of the laminated glass, the first layer, the second layer and the third layer may be laminated.

The interlayer film and the laminated glass of the present invention can be each used in various conveyances such as automobiles, railway vehicles, airplanes and marine vessels, and buildings and the like. The interlayer film and the laminated glass can be each used in an application other than the above. The interlayer film and the laminated glass are respectively preferably an interlayer film and laminated glass for vehicles or buildings, more preferably an interlayer film and laminated glass for vehicles.

The interlayer film and the laminated glass are particularly suitable for automobiles. The interlayer film and the laminated glass are preferably used in, for example, front glass, side glass, rear glass or roof glass for automobiles. The interlayer film and the laminated glass are particularly preferably used in side glass. While a side door does not often comprise any frame for securing side glass (laminated glass), the laminated glass of the present invention is high in flexural rigidity and thus can be prevented from being warped even if comprising no frame for securing. Thus, there is hardly caused any failure, for example, interference with opening and closing of a side door due to low flexural rigidity of side glass.

## Examples

The present invention is described in more detail with reference to Examples, but the present invention is not limited to these Examples at all.

Various physical properties and evaluation methods are as follows.

[Particle size of silica particle]

The silica particle was isolated by a method involving dissolving the first layer in THF at 23°C and performing

separation by centrifugation. The silica particle isolated was dispersed in water, particle size distribution data was obtained in a measurement range from 0.04 to 500 μm by a laser diffraction method with a measurement apparatus "1090L model" (manufactured by CILAS), and d50 (particle size at a cumulative volume of 50%) was measured, to thereby obtain the average secondary particle size (d50) of the silica particle. A peak at which the particle size was maximum was defined as the maximum particle size peak value and a peak at which the particle size was minimum was defined as the minimum particle size peak value, among peaks observed in the particle size distribution data.

[Amount of oil absorption of silica particle]

The amount of oil absorption of DBP (dibutyl phthalate) was measured with an absorption measuring device (model number "S-500" manufactured by Asahisouken Corporation) according to JIS K 6217-4.

[Measurement of tanδ]

A resin composition for forming the first layer was prepared by the same method as each method in Examples and Comparative Examples, the resin composition obtained was press formed by a press forming machine, a sample obtained was dried in vacuum at 50°C for 2 hours or more, and thus a sample having a thickness of 0.35 mm was obtained. The sample was used to perform viscoelasticity measurement with a viscoelasticity measurement apparatus "Rheometer ARES-G2" manufactured by TA Instruments. The geometry of a measurement tool here corresponded to a parallel plate having a diameter of 8 mm, measurement conditions of a temperature of 200°C, a strain of 8% and a frequency range from 100 to 0.1 rad/s were adopted, and sweeping was performed from 100 rad/s. The tanδ value at a frequency of 0.1 rad/s was defined as the tanδ at 0.1 rad/s and 200°C.

[Glass transition temperature]

The first layer was peeled from the interlayer film obtained, and the first layer obtained was press formed at 150°C. Thereafter, viscoelasticity was measured with a viscoelasticity measurement apparatus "Rheometer ARES-G2" manufactured by TA Instruments. A sample prepared by punching out the first layer using a parallel plate having a diameter of 8 mm was subjected to measurement in a shear mode in a condition of a temperature rise from -30°C to 100°C at a rate of temperature rise of 3°C/min and in conditions of a frequency of 1 Hz and a strain of 1%. The peak temperature of loss tangent in measurement results obtained was defined as the glass transition temperature Tg (°C). The glass transition temperatures of the second layer and the third layer were determined in the same manner.

[Young's modulus]

A resin composition was prepared by the same method as each method in Examples and Comparative Example, the resin composition obtained was press formed at 150°C, and a formed product (first layer, second layer or third layer) having a thickness of 800 μm was obtained. The formed product obtained was punched by Super Dumbbell Cutter "SDK-600" manufactured by Dumbbell Co., Ltd., to obtain a test piece having a total length of 120 mm. The test piece obtained was stored at 23°C and a humidity of 30% RH for 12 hours. Thereafter, the test piece was subjected to a tensile test at 200 mm/min by use of "Tensilon" manufactured by A&D Co., Ltd., in a constant temperature room at 25°C. The slope in a minute strain region with respect to a stress-strain curve obtained was calculated, and defined as the Young's modulus.

Each gauge line (distance between gauge lines: 40 mm) was drawn at a position of 40 mm from each of both ends of the test piece, and the thickness of the test piece, between such gauge lines, was measured. The thickness of the test piece at each portion of such gauge lines and the thickness of the test piece at the intermediate point between such two gauge lines were measured, the average value thereof was defined as the thickness between such gauge lines, and the cross-sectional area was determined from the thickness. The thickness was measured with "Digimatic Indicator" (ID-C112C) manufactured by Mitutoyo Corporation.

Thereafter, the test piece was subjected to a tensile test at 200 mm/min and at a distance between clamps of 7 cm by use of Tensilon "RTE-1210" manufactured by A&D Co., Ltd., in a constant temperature room at 25°C. The stress and the strain were calculated by the following expressions.

$$\text{Stress} = \text{Load/Initial cross-sectional area between gauge lines}$$

$$\text{Strain} = (\text{Amount of increase in distance between clamps/Initial distance between gauge lines}) \times 100$$

When the Young's modulus of the first layer was measured, the slope at a strain of 0 to 10% in the stress-strain curve obtained was defined as the Young's modulus. When the respective Young's moduli of the second layer and the third layer were measured, the slope at a strain of 0 to 10% in the stress-strain curve obtained was also defined as each of the Young's moduli.

[Equivalent rigidity]

The equivalent rigidity E* of the interlayer film was calculated from each of the Young's moduli and thicknesses of the first layer, the second layer and the third layer, according to the following expression. The thicknesses of the first layer, the second layer and the third layer were respectively measured by observing the cross sections of the first layer, the second layer and the third layer with an optical microscope:

$$\text{Expression (X)}: E^* = (\Sigma_i ai)/(\Sigma_i ai/Ei)$$

wherein Ei represents the Young's modulus of the $i^{th}$ layer and ai represents the thickness of the $i^{th}$ layer. $\Sigma_i$ means calculation of the sum of numerical values with respect to i layers.

A case of an equivalent rigidity of 4 MPa or more was evaluated as "A" and a case of an equivalent rigidity of less than 4 MPa was evaluated as "B".

[Sound insulating performance]

Each interlayer film obtained in Examples and Comparative Examples was cut to a size of 30 cm length × 2.5 cm width. Next, the interlayer film was sandwiched between two sheets of green glass (30 cm length × 2.5 cm width × 2 mm thickness) according to JIS R3208, to thereby obtain a laminate. The laminate was placed in a rubber bag, subjected to degassing at a degree of vacuum of 2.6 kPa for 20 minutes, thereafter transferred into an oven with being subjected to degassing, furthermore retained at 90°C for 30 minutes and pressed in vacuum, and preliminarily compression bonded. The laminate preliminarily compression bonded was compression bonded in an autoclave in conditions of 135°C and a pressure of 1.2 MPa for 20 minutes, to thereby obtain laminated glass.

The laminated glass obtained was subjected to vibration excitation with a vibration generator ("Vibration Exciter G21-005D" manufactured by Shinken Co., Ltd.) for a dumping test. Vibration characteristics here obtained were subjected to amplification with a mechanical impedance measurement apparatus ("XG-81" manufactured by Rion Co., Ltd.), and a vibration spectrum was analyzed by an FFT spectrum analyzer ("FFT Analyzer HP3582A" manufactured by Yokogawa Hewlett Packard). A graph illustrating a relationship between the sound frequency (Hz) and the sound transmission loss (dB) at 20°C was created from the rate between the loss coefficient obtained and the resonant frequency of the laminated glass, and the minimal sound transmission loss (TL value) around a sound frequency of 2,000 Hz was determined. As the TL value is higher, the sound insulating performance is higher. The sound insulating performance was rated according to the following criteria.

[Rating criteria of sound insulating performance]

A: TL value of 35dB or more
B: TL value of less than 35dB

[Haze]

Each interlayer film produced in Examples and Comparative Examples was cut to a size of 30 cm length × 15 cm width, sandwiched between two sheets of clear float glass (10 cm length × 10 cm width × 2.5 mm thickness), retained in a vacuum laminator at 90°C for 30 minutes, and pressed in vacuum. The interlayer film which was put out of the glass was cut off, to thereby produce laminated glass for evaluation. The haze value of the laminated glass obtained, with respect to light at 340 to 1800 nm, was measured with an integration turbidimeter (manufactured by Tokyo Denshoku

Co., Ltd.) in each environment at 23°C and 80°C by a method according to JIS K 6714.

A case where both the haze values at 23°C and 80°C were each 0.8% or less was evaluated as "A", and a case where even one of the haze values was more than 0.8% was evaluated as "B".

[Flow mark]

Each interlayer film obtained in Examples and Comparative Examples was cut to a size of 30 cm length × 15 cm width. Next, clear float glass (30 cm length × 15 cm width × 2.5 mm thickness) was prepared. The interlayer film obtained was sandwiched between two sheets of clear float glass, retained in a vacuum laminator at 90°C for 30 minutes, and pressed in vacuum, to thereby obtain a laminate. A portion of the interlayer film in the laminate, the portion being put out of the glass plate, was cut off to thereby obtain laminated glass.

The light source for use in flow mark evaluation was S-Light manufactured by Nippon Gijutsu Center Co., Ltd. The laminated glass was placed between a light source and a screen so that the distance between the light source and the screen was 200 cm and the distance between the light source and the interlayer film was 180 cm. A surface of the laminated glass was set so as to be perpendicularly irradiated with light. An image projected on the screen was taken by a camera. The flow mark was rated according to the following criteria.

[Rating criteria of flow mark]

A: strip-shaped unevenness (flow mark) not clearly observed
B: strip-shaped unevenness (flow mark) slightly observed
C: strip-shaped unevenness (flow mark) observed

Examples of a standard sample rated as "A" were illustrated in Figs. 4(a) and (b), an example of a standard sample rated as "B" was illustrated in Fig. 5, and examples of a standard sample rated as "C" were illustrated in Figs. 6(a) and (b).

[Example 1]

A silica particle (trade name "Nipsil SP-200", manufactured by Tosoh Silica Corporation, precipitated silica) was pulverized using a dry jet mill, to produce silica particle (a). A resin composition for a first layer was obtained by kneading 100 parts by mass of a polyvinyl butyral resin as a polyvinyl acetal resin, 75 parts by mass of triethylene glycol-di-2-ethylhexanoate (3GO) as a plasticizer, and 20 parts by mass of silica particle (a), by use of a co-extruder. 100 parts by mass of a polyvinyl butyral resin as a polyvinyl acetal resin, and 32 parts by mass of triethylene glycol-di-2-ethylhexanoate (3GO) as a plasticizer were kneaded in a co-extruder, to thereby obtain each resin composition for second and third layers. The details of the polyvinyl butyral resins for use in the first to third layers are as shown in Table 1.

The obtained resin compositions for first to third layers were co-extruded by the co-extruder, to thereby obtain an interlayer film having a three-layer structure including a second layer having a thickness of 360 μm, a first layer having a thickness of 80 μm, and a third layer having a thickness of 360 μm. Various evaluation results are shown in Table 1.

[Example 2]

A silica particle (trade name "Nipsil K-500", manufactured by Tosoh Silica Corporation, precipitated silica) was pulverized using a jet mill by dry pulverization, to produce silica particle (b). The same manner as in Example 1 was carried out except that the silica particle to be compounded in the resin composition for a first layer used here was silica particle (b) instead of silica particle (a).

[Example 3]

A silica particle (trade name "Nipsil HD", manufactured by Tosoh Silica Corporation, precipitated silica) was pulverized using a dry jet mill by dry pulverization, to produce silica particle (c). The same manner as in Example 1 was carried out except that the silica particle to be compounded to the resin composition for a first layer used here was silica particle (c) instead of silica particle (a).

[Examples 4 to 6]

The same manner as in Example 1 was carried out except that the amount of compounding of the silica particle was changed as described in Table 1.

[Example 7]

75 parts by mass of triethylene glycol-di-2-ethylhexanoate (3GO) as a plasticizer was mixed with 20 parts by mass of a silica particle (trade name "Nipsil K-500", manufactured by Tosoh Silica Corporation, precipitated silica), and the mixture was dispersed by a high-speed shear stirring apparatus and furthermore pulverized by a high-pressure wet atomizing apparatus, to thereby obtain a plasticizer composition comprising silica particle (d) pulverized. 100 parts by mass of a polyvinyl butyral resin as a polyvinyl acetal resin, and the plasticizer composition were kneaded using a co-extruder, to thereby obtain a resin composition for a first layer. Each resin composition for second and third layers was prepared as in Example 1, and an interlayer film having a three-layer structure was obtained by the same method as in Example 1.

[Comparative Examples 1 to 5]

The same manner as in Example 1 was carried out except that each of silica particles (e) to (i) was used as the silica particle instead of silica particle (a). Silica particles (e) to (i) were each obtained by not pulverizing each silica particle described below, and were used as they were.

[Comparative Example 6]

The same manner as in Example 1 was carried out except that a resin composition obtained by kneading 100 parts by mass of a polyvinyl butyral resin and 75 parts by mass of a plasticizer was used as a resin composition for a first layer, and no silica particle was comprised in the first layer.

[Table 1]

| | | | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|---|---|
| First resin layer | Thickness | | μm) | 80 | 80 | 80 | 80 | 80 | 80 | 80 | 80 | 80 | 80 | 80 | 80 | 80 |
| | Polyvinyl acetal resin | Average degree of polymerization of PVA | | 3000 | 3000 | 3000 | 3000 | 3000 | 3000 | 3000 | 3000 | 3000 | 3000 | 3000 | 3000 | 3000 |
| | | Amount of hydroxyl group | % by mol | 23.2 | 23.2 | 23.2 | 23.2 | 23.2 | 23.2 | 23.2 | 23.2 | 23.2 | 23.2 | 23.2 | 23.2 | 23.2 |
| | | Degree of acetylation | % by mol | 12.1 | 12.1 | 12.1 | 12.1 | 12.1 | 12.1 | 12.1 | 12.1 | 12.1 | 12.1 | 12.1 | 12.1 | 12.1 |
| | | Degree of acetalization | % by mol | 64.7 | 64.7 | 64.7 | 64.7 | 64.7 | 64.7 | 64.7 | 64.7 | 64.7 | 64.7 | 64.7 | 64.7 | 64.7 |
| | | Content | parts by mass | 100 | 100 | 100 | 100 | 100 | 100 | 100 | 100 | 100 | 100 | 100 | 100 | 100 |
| | Plasticizer | Type | | 3GO | 3GO | 3GO | 3GO | 3GO | 3GO | 3GO | 3GO | 3GO | 3GO | 3GO | 3GO | 3GO |
| | | Content | parts by mass | 75 | 75 | 75 | 75 | 75 | 75 | 75 | 75 | 75 | 75 | 75 | 75 | 75 |
| | Silica particle | Type | | (a) | (b) | (c) | (a) | (a) | (a) | (d) | (e) | (f) | (g) | (h) | (i) | - |
| | | Content | parts by mass | 20 | 20 | 20 | 10 | 24 | 30 | 20 | 20 | 20 | 20 | 20 | 20 | - |
| | | Minimum particle size peak value | μm | 0.2 | 1.4 | 1.5 | 0.2 | 0.2 | 0.2 | 0.24 | 8 | 0.1 | 2.2 | 6.2 | 5.3 | - |
| | | Particle size (d 50) | um | 0.35 | 1.4 | 1.3 | 0.35 | 0.35 | 0.35 | 0.24 | 7.4 | 0.1 | 2.3 | 6.1 | 5.3 | - |
| | | Maximum particle size peak value | μm | 1.9 | 1.4 | 1.5 | 1.9 | 1.9 | 1.9 | 6.5 | 8 | 26.5 | 2.2 | 6.2 | 5.3 | - |
| | | Amount of oil absorption | ml/100 g | 281 | 276 | 298 | 281 | 281 | 281 | 281 | 292 | 359 | 323 | 293 | 354 | - |

(continued)

| | | | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|---|---|
| | Glass transition temperature (Tg) | | °C | -4 | -4 | -4 | -4 | -4 | -4 | -4 | -4 | -4 | -4 | -4 | -4 | -4 |
| | Young's modulus | | MPa | 0.66 | 0.83 | 0.80 | 0.55 | 0.71 | 0.80 | 0.53 | 0.80 | 0.85 | 0.87 | 0.70 | 0.81 | 0.42 |
| Second and third resin layers | Thickness | | μm | 360 | 360 | 360 | 360 | 360 | 360 | 360 | 360 | 360 | 360 | 360 | 360 | 360 |
| | Polyvinyl acetal resin | Average degree of polymerization of PVA | | 1700 | 1700 | 1700 | 1700 | 1700 | 1700 | 1700 | 1700 | 1700 | 1700 | 1700 | 1700 | 1700 |
| | | Amount of hydroxyl group | % by mol | 34.5 | 34.5 | 34.5 | 34.5 | 34.5 | 34.5 | 34.5 | 34.5 | 34.5 | 34.5 | 34.5 | 34.5 | 34.5 |
| | | Degree of acetylation | % by mol | 0.8 | 0.8 | 0.8 | 0.8 | 0.8 | 0.8 | 0.8 | 0.8 | 0.8 | 0.8 | 0.8 | 0.8 | 0.8 |
| | | Degree of acetalization | % by mol | 64.7 | 64.7 | 64.7 | 64.7 | 64.7 | 64.7 | 64.7 | 64.7 | 64.7 | 64.7 | 64.7 | 64.7 | 64.7 |
| | | Content | parts by mass | 100 | 100 | 100 | 100 | 100 | 100 | 100 | 100 | 100 | 100 | 100 | 100 | 100 |
| | Plasticizer | Type | | 3GO | 3GO | 3GO | 3GO | 3GO | 3GO | 3GO | 3GO | 3GO | 3GO | 3GO | 3GO | 3GO |
| | | Content | parts by mass | 32 | 32 | 32 | 32 | 32 | 32 | 32 | 32 | 32 | 32 | 32 | 32 | 32 |
| | Glass transition temperature (Tg) | | °C | 39 | 39 | 39 | 39 | 39 | 39 | 39 | 39 | 39 | 39 | 39 | 39 | 39 |
| | Young's modulus | | MPa | 35.0 | 35.0 | 35.0 | 35.0 | 35.0 | 35.0 | 35.0 | 35.0 | 35.0 | 35.0 | 35.0 | 35.0 | 35.0 |
| Evaluation | Sound insulating performance: TL method | | | A | A | A | A | A | A | A | A | A | A | A | A | A |
| | Equivalent rigidity | | MPa | 5.64 | 6.84 | 6.64 | 4.82 | 6.00 | 6.64 | 4.66 | 6.64 | 6.98 | 7.11 | 5,93 | 6.70 | 3.79 |
| | Rating of rigidity | | | A | A | A | A | A | A | A | A | A | A | A | A | B |
| | Haze value at 23°C | | % | 0.28 | 0.42 | 0.64 | 0.24 | 0.29 | 0.31 | 0.32 | 0.96 | 0.24 | 0.28 | 0.39 | 0.33 | 0.32 |
| | Haze value at 80°C | | % | 0.31 | 0.33 | 0.40 | 0.27 | 0.32 | 0.34 | 0.45 | 1.20 | 1.95 | 2.99 | 0.98 | 0.98 | 0.31 |

(continued)

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|
| Rating of haze | A | A | A | A | A | A | A | B | B | B | B | B | A |
| Tanδ value of first layer at 200°C (at 0.1 rad/s) | 0.94 | 0.90 | 0.97 | 1.27 | 0.81 | 0.61 | 1.01 | 0.80 | 0.74 | 0.95 | 1.02 | 0.97 | 1.43 |
| Rating of flow mark | A | A | A | A | A | c | A | A | C | A | A | A | A |

The silica particle type with respect to each silica particle in Table 1 is as follows.

Silica (a): trade name "Nipsil SP-200", manufactured by Tosoh Silica Corporation, precipitated silica (dry pulverized)
Silica (b): trade name "Nipsil K-500", manufactured by Tosoh Silica Corporation, precipitated silica (dry pulverized)
Silica (c): trade name "Nipsil HD", manufactured by Tosoh Silica Corporation, precipitated silica (dry pulverized)
Silica (d): trade name "Nipsil SP-200", manufactured by Tosoh Silica Corporation, precipitated silica (wet pulverized)
Silica (e): trade name "Nipsil HD", manufactured by Tosoh Silica Corporation, precipitated silica (non-pulverized)
Silica (f): trade name "AEROSIL 300", manufactured by Nippon Aerosil Co., Ltd., fumed silica (non-pulverized)
Silica (g): trade name "Silysia 310P", manufactured by Fuji Silysia Chemical Ltd., gel method silica (non-pulverized)
Silica (h): trade name "Mizukasil P801", manufactured by Mizusawa Industrial Chemicals, Ltd., precipitated silica (non-pulverized)
Silica (i): trade name "Mizukasil P803", manufactured by Mizusawa Industrial Chemicals, Ltd., precipitated silica (non-pulverized)

As described above, each of Examples, in which the first layer comprised a silica particle having an average secondary particle size and a maximum particle size peak value in respective predetermined ranges, thus not only allowed flexural rigidity to be ensured, but also allowed both the haze values at 23°C and 80°C to be favorable.

Reference Signs List

10 laminated glass
11 first layer
12 second layer
13 third layer
20 laminated glass
21, 22 laminated glass member

## Claims

1. An interlayer film for laminated glass, the interlayer film having a structure of one or two or more layers, comprising: a first layer comprising a thermoplastic resin and a silica particle which has an average secondary particle size (d50) of 0.01 μm or more and 2.2 μm or less and a maximum particle size peak value of 20 μm or less.

2. The interlayer film for laminated glass according to claim 1, wherein the silica particle has a minimum particle size peak value of 0.01 μm or more and 2.0 μm or less.

3. The interlayer film for laminated glass according to claim 1 or 2, wherein an amount of oil absorption of the silica particle is 230 ml/100 g or more and 500 ml/100 g or less.

4. The interlayer film for laminated glass according to any one of claims 1 to 3, wherein a content of the silica particle is 12 parts by mass or more and 60 parts by mass or less based on 100 parts by mass of the thermoplastic resin.

5. The interlayer film for laminated glass according to any one of claims 1 to 4, wherein a tanδ at 0.1 rad/s and 200°C of the first layer is 0.8 or more.

6. The interlayer film for laminated glass according to any one of claims 1 to 5, wherein a glass transition temperature of the first layer is 10°C or less.

7. The interlayer film for laminated glass according to any one of claims 1 to 6, comprising:

   a second layer comprising a thermoplastic resin, wherein
   the second layer is provided on one surface of the first layer, and
   a glass transition temperature of the first layer is lower than a glass transition temperature of the second layer.

8. The interlayer film for laminated glass according to claim 7, comprising:

a third layer comprising a thermoplastic resin, wherein
the third layer is provided on another surface of the first layer, and
a glass transition temperature of the first layer is lower than a glass transition temperature of the third layer.

**9.** The interlayer film for laminated glass according to any one of claims 1 to 8, comprising:

a second layer comprising a thermoplastic resin, wherein
the thermoplastic resin in the first layer is a polyvinyl acetal resin, and
the thermoplastic resin in the second layer is a polyvinyl acetal resin.

**10.** The interlayer film for laminated glass according to claim 9, wherein

a content rate of a hydroxyl group in the polyvinyl acetal resin in the first layer is lower than a content rate of a hydroxyl group in the polyvinyl acetal resin in the second layer, and
an absolute value of a difference between the content rate of a hydroxyl group in the polyvinyl acetal resin in the first layer and the content rate of a hydroxyl group in the polyvinyl acetal resin in the second layer is 1% by mol or more.

**11.** The interlayer film for laminated glass according to claim 9 or 10, comprising:

a third layer comprising a thermoplastic resin, wherein
the thermoplastic resin in the third layer is a polyvinyl acetal resin.

**12.** A laminated glass comprising the interlayer film for laminated glass according to any one of claims 1 to 11, and two laminated glass members, wherein the interlayer film for laminated glass is placed between the two laminated glass members.

Fig. 1

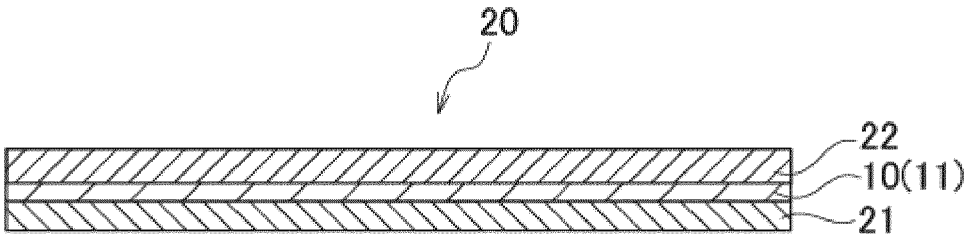


Fig. 2

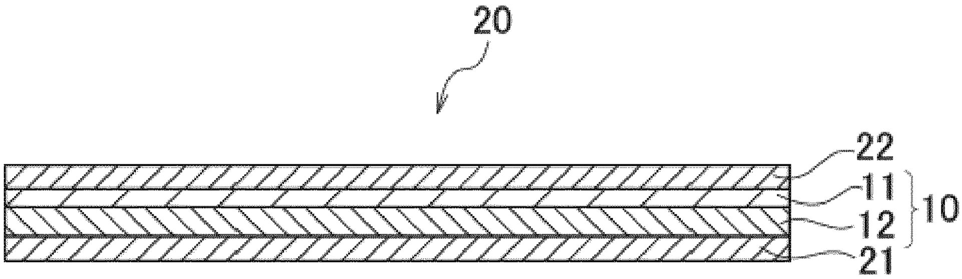


Fig. 3

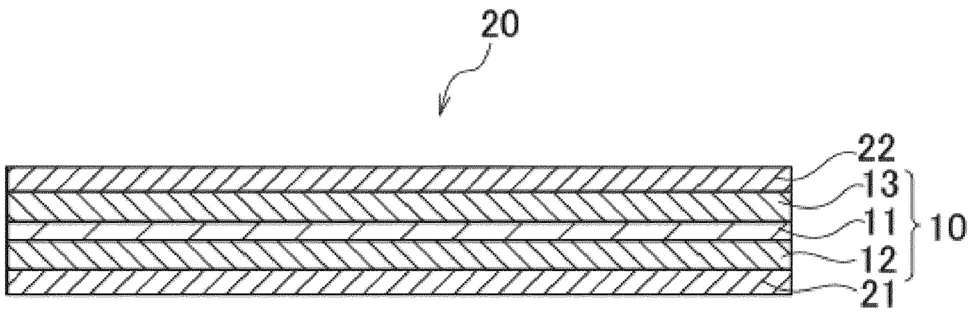

Fig. 4

(a)

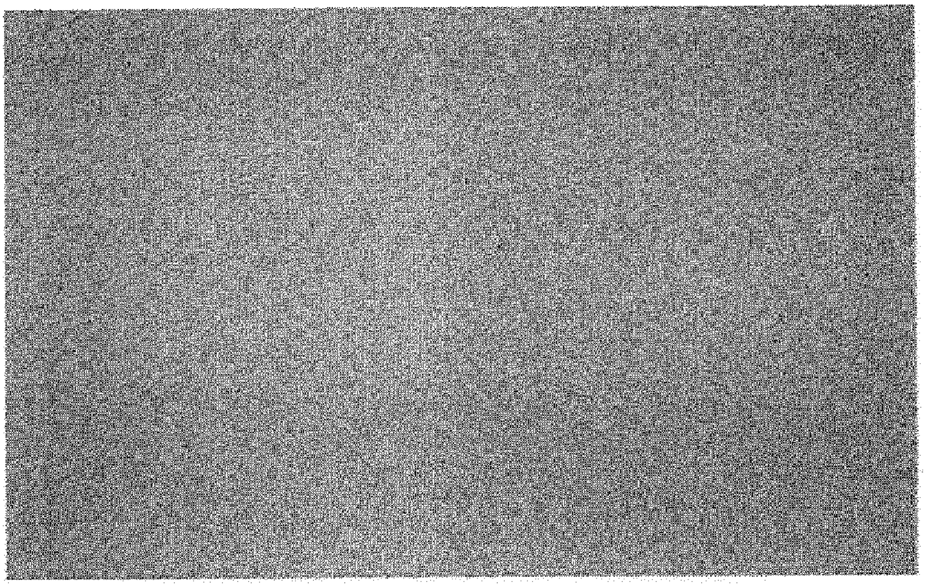

(b)

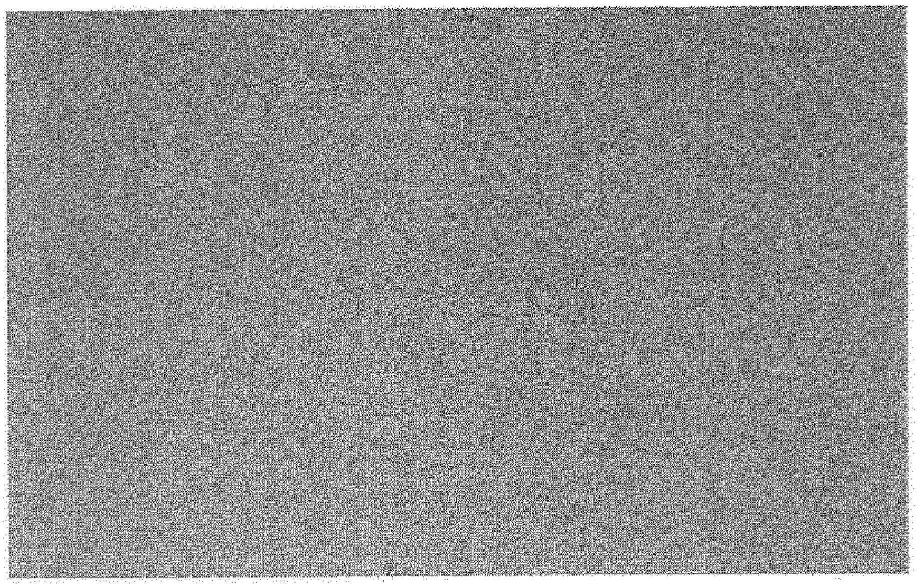

Fig. 5

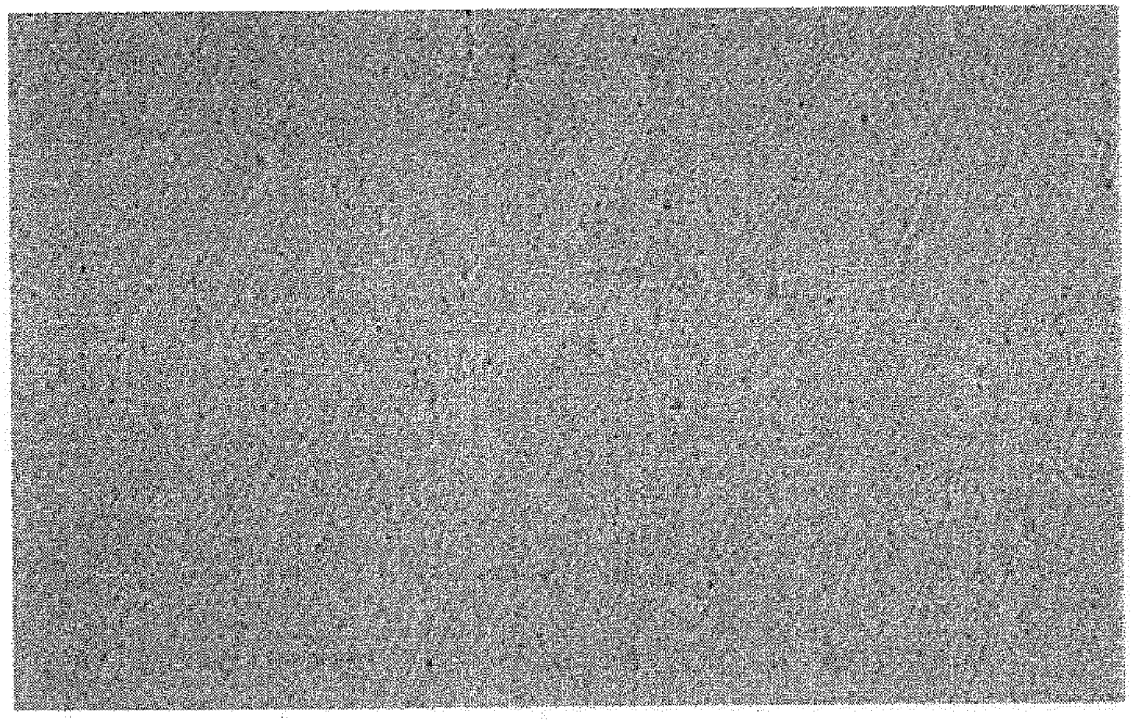

Fig. 6

(a)

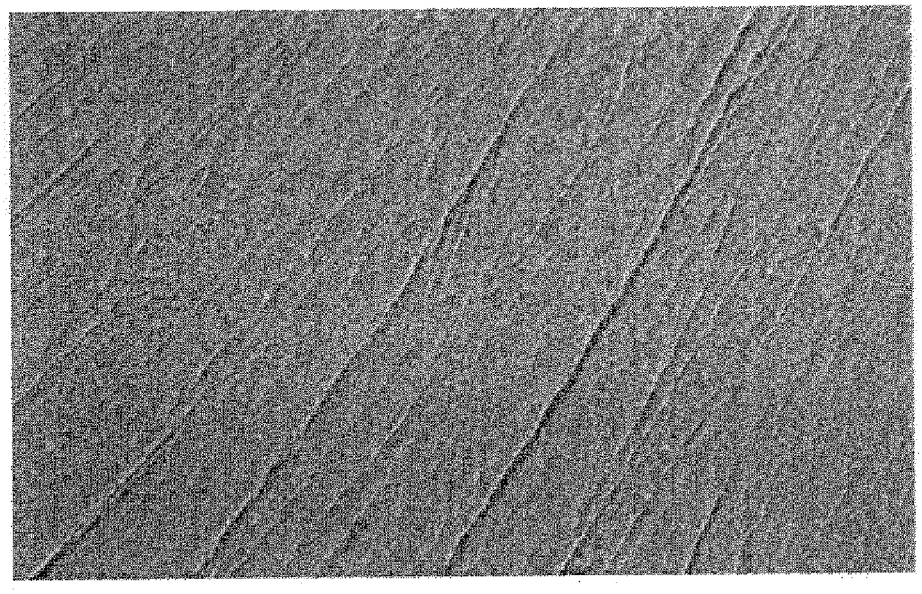

(b)

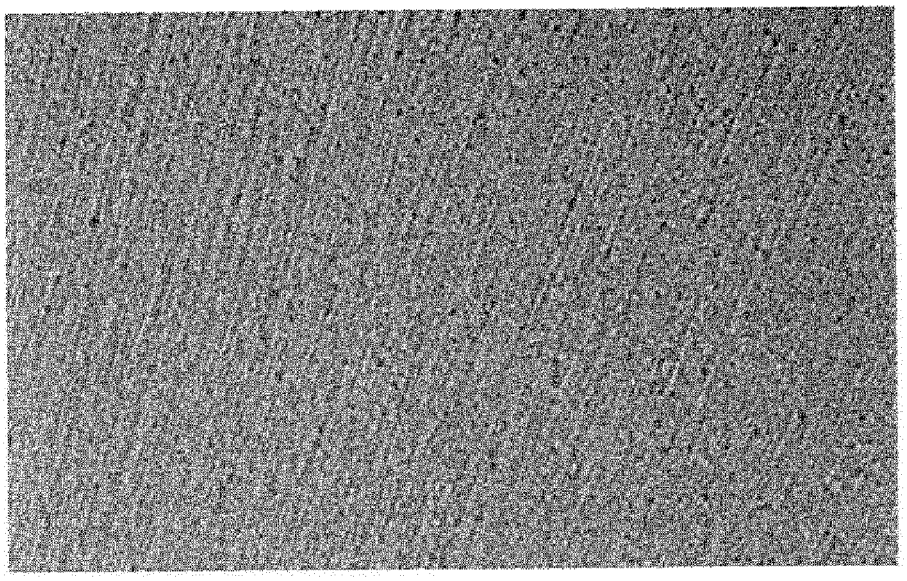

## INTERNATIONAL SEARCH REPORT

International application No.
PCT/JP2020/045880

A. CLASSIFICATION OF SUBJECT MATTER
C03C 27/12(2006.01)i; B32B 27/20(2006.01)i
FI: C03C27/12 N; C03C27/12 D; B32B27/20 Z
According to International Patent Classification (IPC) or to both national classification and IPC

B. FIELDS SEARCHED
Minimum documentation searched (classification system followed by classification symbols)
C03C27/12; B32B27/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-107857 A (GRANDEX CO., LTD.) 21 May 2009 (2009-05-21) paragraphs [0102]-[0121], fig. 9-17, claims | 1-2, 12<br>3-11 |
| Y | JP 2008-062494 A (NIPPON PAPER INDUSTRIES CO., LTD.) 21 March 2008 (2008-03-21) claims, paragraph [0017] | 3 |
| Y | WO 2019/194113 A1 (SEKISUI CHEMICAL CO., LTD.) 10 October 2019 (2019-10-10) paragraphs [0060], [0099], [0107]-[0110], [0154], [0161]-[0162], examples, fig. 3 | 4-11 |
| Y | WO 2012/063881 A1 (SEKISUI CHEMICAL CO., LTD.) 18 May 2012 (2012-05-18) example 1, claims, paragraph [0018] | 7-11 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 January 2021 (28.01.2021) | 09 February 2021 (09.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/045880

| Patent Documents referred in the Report | Publication Date | Patent Family | Publication Date |
|---|---|---|---|
| JP 2009-107857 A | 21 May 2009 | (Family: none) | |
| JP 2008-062494 A | 21 Mar. 2008 | (Family: none) | |
| WO 2019/194113 A1 | 10 Oct. 2019 | (Family: none) | |
| WO 2012/063881 A1 | 18 May 2012 | US 2013/0224466 A1<br>example 1, claims, paragraph [0018]<br>EP 2639206 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008122610 A
- JP 2009540065 A
- WO 2016039477 A
- WO 2016039473 A
- WO 2019131520 A